(19) Europäisches Patentamt
European Patent Office
Office européen des brevets

(11) **EP 4 632 295 A1**

(12) **EUROPEAN PATENT APPLICATION**
published in accordance with Art. 153(4) EPC

(43) Date of publication:
**15.10.2025 Bulletin 2025/42**

(51) International Patent Classification (IPC):
**F25B 41/26** (2021.01)   **F16K 11/065** (2006.01)
**F25B 1/00** (2006.01)

(21) Application number: **25721452.8**

(22) Date of filing: **03.02.2025**

(86) International application number:
**PCT/JP2025/003362**

(87) International publication number:
**WO 2025/182460 (04.09.2025 Gazette 2025/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2024 JP 2024029140**

(71) Applicant: **DAIKIN INDUSTRIES, LTD.
Osaka-Shi, Osaka 530-0001 (JP)**

(72) Inventor: **NISHIGUCHI, Tomoya
Osaka-shi, Osaka 530-0001 (JP)**

(74) Representative: **Hoffmann Eitle
Patent- und Rechtsanwälte PartmbB
Arabellastraße 30
81925 München (DE)**

(54) **REFRIGERATION DEVICE HAVING FOUR-WAY SWITCHING VALVE**

(57)     A refrigeration apparatus (100) includes a refrigerant circuit (90) and a control unit (9). The refrigerant circuit (90) includes a compressor (11), a four-way switching valve (12), and a connecting flow path (91) connecting the compressor (11) and the four-way switching valve (12). The refrigerant circuit (90) circulates a refrigerant (R). The control unit (9) performs switching of the four-way switching valve (12) to change a circulation path of the refrigerant (R) in the refrigerant circuit (90). The control unit (9) performs the switching of the four-way switching valve (12) when a switch permission condition for the refrigerant (R) in the connecting flow path (91) is satisfied, and does not perform the switching of the four-way switching valve (12) when the switch permission condition is not satisfied.

HIGH-PRESSURE GAS REFRIGERANT

LOW-PRESSURE GAS REFRIGERANT

FIG. 2

EP 4 632 295 A1

## Description

### TECHNICAL FIELD

The present disclosure relates to a refrigeration apparatus including a four-way switching valve.

### BACKGROUND ART

A four-way switching valve disclosed in Patent Literature 1 (JP S63-015056 A) is mounted in a refrigeration apparatus to switch a circulation direction of a refrigerant. The four-way switching valve is of a so-called differential pressure-driven type, and moves a valve body by using a pressure of the refrigerant passing through a valve chamber.

### SUMMARY OF THE INVENTION

<Technical Problem>

The refrigerant passing through the four-way switching valve can bring a refrigerating machine oil into the valve chamber or the small-diameter pipes constituting the four-way switching valve. If the refrigerating machine oil stagnates in a small-diameter pipe or the like, the refrigerating machine oil may inhibit movement of the valve body, leading to interference with an operation of switching the circulation direction of the refrigerant.

<Solution to Problem>

A refrigeration apparatus according to a first aspect includes a refrigerant circuit and a control unit. The refrigerant circuit includes a compressor, a four-way switching valve, and a connecting flow path connecting the compressor and the four-way switching valve. The refrigerant circuit circulates a refrigerant. The control unit performs switching of the four-way switching valve to change a circulation path of the refrigerant in the refrigerant circuit. The control unit performs the switching of the four-way switching valve when a switch permission condition for the refrigerant in the connecting flow path is satisfied, and does not perform the switching of the four-way switching valve when the switch permission condition is not satisfied.

In this configuration, when a state of the refrigerant in the connecting flow path does not satisfy the switch permission condition, the switching of the four-way switching valve is not performed. It is therefore possible to prevent a switching operation from failing or prevent the switching operation from damaging the four-way switching valve.

A refrigeration apparatus according to a second aspect is the refrigeration apparatus according to the first aspect, in which upon receiving a switch command to switch the four-way switching valve, the control unit does not perform the switching of the four-way switching valve when the switch permission condition is not satisfied.

In this configuration, even when receiving the switch command, the control unit does not perform the switching of the four-way switching valve if the switch permission condition is not satisfied. It is therefore possible to prevent a switching operation from failing or prevent the switching operation from damaging the four-way switching valve.

A refrigeration apparatus according to a third aspect is the refrigeration apparatus according to the first or second aspect, in which the switch permission condition relates to a Froude number that is an index indicating a refrigerant circulation amount. The Froude number is represented by Fr in the following formula.

[Formula 1]

$$Fr = \frac{\rho_G U_G^2}{\rho_L g D}$$

Here, $\rho_G$ (kg/m³) is a density of a gas refrigerant. $\rho_L$ (kg/m³) is a density of a liquid refrigerant. $U_G$ (m/s) is a flow velocity of the gas refrigerant. g (m/s²) is a gravitational acceleration. D (m) is an inner diameter of a pipe constituting the connecting flow path.

In this configuration, the switch permission condition relates to the refrigerant circulation amount. Therefore, permission or prohibition of the switching of the four-way switching valve can be determined in accordance with a speed at which the refrigerant circulates.

A refrigeration apparatus according to a fourth aspect is the refrigeration apparatus according to the third aspect, in which the switch permission condition is that the Froude number is one or more.

In this configuration, the switch permission condition is that a circulation amount of the refrigerant is a predetermined value or more. Therefore, when the circulation amount of the refrigerant is small, and therefore the refrigerating machine oil is expected to stagnate in the connecting flow path, it is possible to suppress a failure of the switching operation or damage to the four-way switching valve due to the presence of a refrigerating machine oil that can be a resistance to the switching operation.

A refrigeration apparatus according to a fifth aspect is the refrigeration apparatus according to any one of the first to fourth aspects, in which the control unit performs an oil purge operation of moving a refrigerating machine oil existing in the connecting flow path downstream of the four-way switching valve by driving the compressor when the switch permission condition is not satisfied.

In this configuration, the oil purge operation is performed when the refrigerating machine oil is expected to stagnate in the connecting flow path. Therefore, the refrigerating machine oil to be a resistance to the switching operation is prevented from remaining in the four-way switching valve.

A refrigeration apparatus according to a sixth aspect is the refrigeration apparatus according to the fifth aspect, in which when the switch permission condition is not satisfied and at least one of immediately after activation or before stop of the refrigeration apparatus, the control unit performs the oil purge operation.

In this configuration, the oil purge operation is executed immediately after the start or before the stop of the refrigeration apparatus. Therefore, the refrigerating machine oil is prevented from remaining in the four-way switching valve.

A refrigeration apparatus according to a seventh aspect is the refrigeration apparatus according to any one of the first to sixth aspects, in which the connecting flow path includes a U-shaped pipe protruding downward.

In this configuration, the connecting flow path has a structure in which the refrigerating machine oil easily stagnates. Therefore, the refrigerating machine oil can be effectively removed from the connecting flow path and the four-way switching valve by executing the oil purge operation.

A refrigeration apparatus according to an eighth aspect is the refrigeration apparatus according to any one of the first to seventh aspects, in which the refrigerant includes carbon dioxide.

In this configuration, the refrigerant includes carbon dioxide. When carbon dioxide is used for the refrigerant, a switching noise of the four-way switching valve tends to be loud. In order to reduce the switching noise, processing of reducing the circulation amount of the carbon dioxide refrigerant may be performed, and as a result, the refrigerating machine oil easily stagnate in the connecting flow path. Therefore, the refrigerating machine oil can be effectively removed from the connecting flow path and the four-way switching valve by executing the oil purge operation.

A refrigeration apparatus according to a ninth aspect is the refrigeration apparatus according to any one of the first to eighth aspects, in which the four-way switching valve includes a valve chamber, a valve body, a first pilot chamber, a second pilot chamber, a first port, a second port, a third port, a fourth port, a first pilot electromagnetic valve, a second pilot electromagnetic valve, a first flow path, a second flow path, and a third flow path, the first to fourth ports being formed in the valve chamber. The valve body slides in the valve chamber. The first pilot chamber is formed at an end of the valve chamber. The second pilot chamber is formed at an end of the valve chamber opposite to the first pilot chamber. The first port receives the refrigerant discharged from the compressor. The second port ejects the refrigerant sucked into the compressor. The third port exchanges refrigerant with a heat source heat exchanger. The fourth port exchanges refrigerant with a utilization heat exchanger. The first pilot electromagnetic valve and the second pilot electromagnetic valve are disposed apart from the valve chamber. The first flow path allows the first pilot chamber and the first pilot electromagnetic valve to communicate with each other. The second flow path allows the second pilot chamber and the second pilot electromagnetic valve to communicate with each other. The third flow path allows communication paths of the first pilot electromagnetic valve and the second pilot electromagnetic valve to communicate with the second port.

In this configuration, the four-way switching valve includes a plurality of flow paths that connects the pilot electromagnetic valves and the valve chambers. Therefore, the oil purge operation can prevent the refrigerating machine oil from remaining in the plurality of flow paths.

## BRIEF DESCRIPTION OF THE DRAWINGS

FIG. 1 is a circuit diagram showing a configuration of a refrigeration apparatus 100.
FIG. 2 is a schematic sectional view showing a four-way switching valve 12 in a cold heat utilization operation.
FIG. 3 is another schematic sectional view showing the four-way switching valve 12 in a transient state.
FIG. 4 is another schematic sectional view showing the four-way switching valve 12 in a hot heat utilization operation.
FIG. 5 is a block diagram showing an electric system of the refrigeration apparatus 100.
FIG. 6 is a schematic diagram showing a connecting pipe between a compressor 11 and the four-way switching valve 12.
FIG. 7 is a flowchart of switching control of the four-way switching valve 12.

FIG. 8 is a flowchart of an oil purge operation.

FIG. 9 is a flowchart of output processing of a switch control signal Q2.

## DESCRIPTION OF EMBODIMENTS

<Embodiments>

(1) Overall configuration

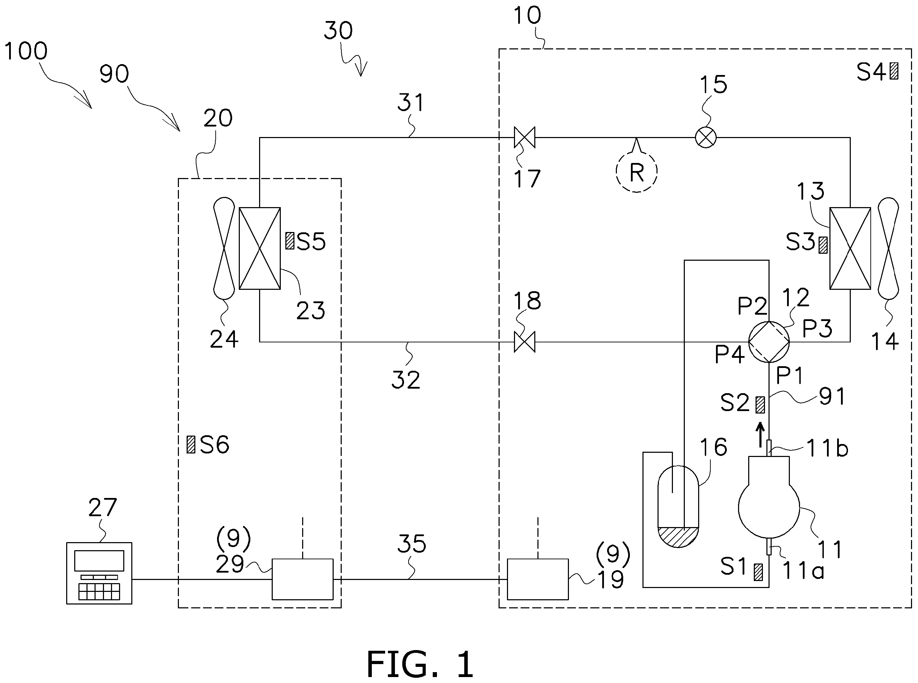

A refrigeration apparatus 100 shown in FIG. 1 is configured to provide a user with hot heat or cold heat acquired from a heat source, and is configured as an air conditioner, for example. The refrigeration apparatus 100 can perform a cold heat utilization operation for providing the user with cold heat and a hot heat utilization operation for providing the user with hot heat. When the refrigeration apparatus 100 is an air conditioner, these operations correspond to a cooling operation and a heating operation, respectively.

The refrigeration apparatus 100 includes a heat source unit 10, a utilization unit 20, a connection piping 30, and a communication line 35. These components constitute a refrigerant circuit 90 that circulates a refrigerant R and a control unit 9 that controls the refrigerant circuit 90.

As the refrigerant R, any refrigerant can be used, but for example, carbon dioxide may be used. In the following description, the refrigerant R is treated as capable of undergoing a phase change to liquid, and terms such as "condensation", "evaporation", "liquid refrigerant", and "gas-liquid two-phase refrigerant" are used for description. However, it should be noted that when the refrigerant R includes carbon dioxide, there is no phase change to liquid, and therefore these terms do not apply strictly.

(1-1) Heat source unit 10

The heat source unit 10 acquires hot heat or cold heat from a heat source such as outdoor air. The heat source unit 10 includes, as components of the refrigerant circuit 90, a compressor 11, a four-way switching valve 12, a heat source heat exchanger 13, a heat source expansion valve 15, an accumulator 16, a liquid shutoff valve 17, and a gas shutoff valve 18. The heat source unit 10 also includes a heat source fan 14 provided near the heat source heat exchanger 13. The heat source unit 10 further includes a heat source control unit 19 as a component of the control unit 9. The heat source unit 10 further includes a low pressure sensor S1, a high pressure sensor S2, a heat source heat exchanger temperature sensor S3, and an outside air temperature sensor S4.

(1-1-1) Compressor 11

The compressor 11 includes a suction pipe 11a and a discharge pipe 11b. The compressor 11 compresses a low-pressure gas refrigerant sucked from the suction pipe 11a, generates a high-pressure gas refrigerant, and discharges the refrigerant from the discharge pipe 11b. The low pressure sensor S1 is provided on a suction side of the compressor 11, in other words, near the suction pipe 11a. The high pressure sensor S2 is provided on a discharge side of the compressor 11, in other words, near the discharge pipe 11b. Both the low pressure sensor S1 and the high pressure sensor S2 measure a pressure of the refrigerant R.

(1-1-2) Four-way switching valve 12

The four-way switching valve 12 switches a circulation direction of the refrigerant R. The four-way switching valve 12 includes a first port P1, a second port P2, a third port P3, and a fourth port P4. The first port P1 is connected to a pipe communicating with the discharge pipe 11b. The second port P2 is connected to a pipe communicating with the accumulator 16. The third port P3 is connected to a pipe communicating with the heat source heat exchanger 13. The fourth port P4 is connected to a pipe communicating with the gas shutoff valve 18.

When the refrigeration apparatus 100 performs the cold heat utilization operation, in the four-way switching valve 12, the first port P1 and the third port P3 are connected, and the second port P2 and the fourth port P4 are connected as indicated by solid lines in FIG. 1. When the refrigeration apparatus 100 performs the hot heat utilization operation, in the four-way switching valve 12, the first port P1 and the fourth port P4 are connected, and the second port P2 and the third port P3 are connected as indicated by broken lines in FIG. 1.

(1-1-3) Heat source heat exchanger 13

The heat source heat exchanger 13 exchanges heat between the outdoor air and the refrigerant R. The heat source heat exchanger 13 functions as a condenser or a heat radiator for the refrigerant R in the cold heat utilization operation, and functions as an evaporator or a heat absorber for the refrigerant R in the hot heat utilization operation. The heat source heat exchanger temperature sensor S3 provided near the heat source heat exchanger 13 measures a condensation temperature, an evaporation temperature, and the like of the refrigerant R in the heat source heat exchanger 13.

(1-1-4) Heat source fan 14

The heat source fan 14 promotes heat exchange in the heat source heat exchanger 13 by moving outdoor air to pass through the inside of the heat source heat exchanger 13. The temperature of the outdoor air is measured by the outside air temperature sensor S4.

(1-1-5) Heat source expansion valve 15

The heat source expansion valve 15 decompresses the refrigerant R and adjusts a flow rate of the refrigerant R.

(1-1-6) Accumulator 16

The accumulator 16 stores a liquid refrigerant component mixed in the gas refrigerant and allows the gas refrigerant to pass therethrough. The accumulator 16 is connected to the suction pipe 11a of the compressor 11. The accumulator 16 prevents the liquid refrigerant from being sucked into the compressor 11.

(1-1-7) Liquid shutoff valve 17

The liquid shutoff valve 17 passes or shuts off a liquid refrigerant, a gas-liquid two-phase refrigerant, and the like. The liquid shutoff valve 17 is opened and closed manually by, for example, an installation worker of the refrigeration apparatus 100.

(1-1-8) Gas shutoff valve 18

The gas shutoff valve 18 passes or shuts off a low-pressure gas refrigerant, a high-pressure gas refrigerant, or the like. The gas shutoff valve 18 is opened and closed manually by, for example, the installation worker of the refrigeration apparatus 100.

(1-1-9) Heat source control unit 19

The heat source control unit 19 acquires measurement value data from the low pressure sensor S1, the high pressure sensor S2, the heat source heat exchanger temperature sensor S3, and the outside air temperature sensor S4. The heat source control unit 19 also controls the compressor 11, the four-way switching valve 12, the heat source fan 14, and the heat source expansion valve 15.

(1-2) Utilization unit 20

The utilization unit 20 provides the user with hot heat or cold heat. The utilization unit 20 includes a utilization heat exchanger 23 as a component of the refrigerant circuit 90. The utilization unit 20 also includes a utilization fan 24 provided near the utilization heat exchanger 23. The utilization unit 20 further includes a utilization control unit 29 as a component of the control unit 9. The utilization unit 20 further includes a utilization heat exchanger temperature sensor S5 and a room temperature sensor S6. A remote controller 27 is connected to the utilization control unit 29 in a wired or wireless manner.

(1-2-1) Utilization heat exchanger 23

The utilization heat exchanger 23 exchanges heat between indoor air and the refrigerant R. The utilization heat exchanger 23 functions as an evaporator or a heat absorber for the refrigerant R in the cold heat utilization operation, and functions as a condenser or a heat radiator for the refrigerant R in the hot heat utilization operation. The utilization heat exchanger temperature sensor S5 provided near the utilization heat exchanger 23 measures a condensation temperature, an evaporation temperature, and the like of the refrigerant R in the utilization heat exchanger 23.

(1-2-2) Utilization fan 24

The utilization fan 24 promotes heat exchange in the utilization heat exchanger 23 by moving indoor air to pass through the utilization heat exchanger 23. The utilization fan 24 also sends air conditioned by the utilization heat exchanger 23 to the vicinity of the user. The temperature of the indoor air is measured by the room temperature sensor S6.

(1-2-3) Utilization control unit 29

The utilization control unit 29 acquires measurement value data from the utilization heat exchanger temperature sensor S5 and the room temperature sensor S6. The utilization control unit 29 also controls the utilization fan 24. In addition, the utilization control unit 29 communicates with the heat source control unit 19 to constitute the control unit 9 together with the heat source control unit 19. The utilization control unit 29 further communicates with the remote controller 27.

(1-2-4) Remote controller 27

The remote controller 27 receives commands from the user and presents information to the user. The commands from the user include execution and switching of the cold heat utilization operation and the hot heat utilization operation in addition to setting of a target temperature and setting of an air volume.

(1-3) Connection piping 30

The connection piping 30 connects the heat source unit 10 and the utilization unit 20 to constitute the refrigerant circuit 90. The connection piping 30 includes a liquid connection pipe 31 and a gas connection pipe 32.

(1-3-1) Liquid connection pipe 31

The liquid connection pipe 31 connects the liquid shutoff valve 17 and the utilization heat exchanger 23, and moves the liquid refrigerant, the gas-liquid two-phase refrigerant, or the like.

(1-3-2) Gas connection pipe 32

The gas connection pipe 32 connects the gas shutoff valve 18 and the utilization heat exchanger 23, and moves the low-pressure gas refrigerant, the high-pressure gas refrigerant, or the like.

(1-4) Communication line 35

The communication line 35 connects the heat source control unit 19 and the utilization control unit 29 to constitute the control unit 9. The communication line 35 transmits a control signal, a status, data, and other signals between the heat source control unit 19 and the utilization control unit 29.

(2) Configuration of four-way switching valve 12

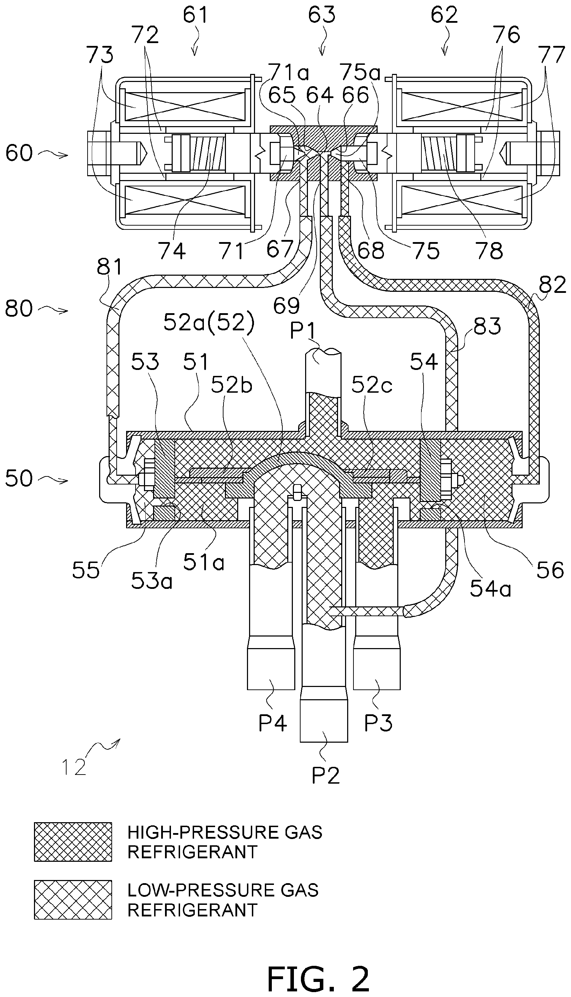

FIG. 2 shows a detailed configuration of the four-way switching valve 12. The four-way switching valve 12 includes a main valve portion 50, a pilot valve portion 60, and a small-diameter pipe group 80.

(2-1) Main valve portion 50

The main valve portion 50 determines the circulation direction of the refrigerant R. The main valve portion 50 includes a casing 51, a valve body 52, a first piston 53, and a second piston 54.

(2-1-1) Casing 51

The casing 51 is a cylindrical metal pipe. An internal space of the casing 51 constitutes a valve chamber 51a. Four pipes constituting the first port P1, the second port P2, the third port P3, and the fourth port P4 are connected to the casing 51. Among the ports, the fourth port P4, the second port P2, and the third port P3 are aligned in a line in that order in a longitudinal direction of the casing 51. The first port P1 is located at a position not aligned with the line of the other ports. The valve chamber 51a is filled with the high-pressure gas refrigerant introduced from the first port P1.

(2-1-2) Valve body 52

The valve body 52 is a member that slides in the valve chamber 51a. The valve body 52 includes a valve main body 52a having an arch shape, a first coupling portion 52b extending in one direction from the valve main body 52a, and a second coupling portion 52c extending from the valve main body 52a in a direction opposite to the first coupling portion 52b. The valve body 52 is movable in a left-right direction in FIG. 2.

(2-1-3) First piston 53

The first piston 53 is fixed to the first coupling portion 52b and moves together with the valve body 52. The first piston 53 forms a first pilot chamber 55 with the casing 51 at a left end of the valve chamber 51a. A first piston hole 53a having a small diameter is formed in the first piston 53. The first pilot chamber 55 communicates with the first port P1 through the first piston hole 53a.

(2-1-4) Second piston 54

The second piston 54 is fixed to the second coupling portion 52c and moves together with the valve body 52. The second piston 54 forms a second pilot chamber 56 with the casing 51 at a right end of the valve chamber 51a. A second piston hole 54a having a small diameter is formed in the second piston 54. The second pilot chamber 56 communicates with the second port P2 via the second piston hole 54a.

(2-2) Pilot valve portion 60

The pilot valve portion 60 adjusts the pressure inside the first pilot chamber 55 and the second pilot chamber 56 by controlling the refrigerant R moving to the first pilot chamber 55 and the second pilot chamber 56. The pilot valve portion 60 includes a first pilot electromagnetic valve 61, a second pilot electromagnetic valve 62, and a connecting portion 63.

(2-2-1) First pilot electromagnetic valve 61

The first pilot electromagnetic valve 61 controls whether to allow the refrigerant R in the second port P2 to reach the first pilot chamber 55. The first pilot electromagnetic valve 61 includes a first pilot valve body 71, a first cylinder 72, a first coil 73, and a first spring 74.
The first pilot valve body 71 is disposed in the first cylinder 72 and is movable in the left-right direction in FIG. 2. A first pilot valve 71a is formed at a right end of the first pilot valve body 71. A restoring force of the first spring 74 acts to move the first pilot valve body 71 to the right side. When a current flows through the first coil 73, the first pilot valve body 71 is attracted to the first coil 73 against the restoring force of the first spring 74, and thus moves to the left side.

(2-2-2) Second pilot electromagnetic valve 62

The second pilot electromagnetic valve 62 controls whether to allow the refrigerant R in the second port P2 to reach the second pilot chamber 56. The second pilot electromagnetic valve 62 includes a second pilot valve body 75, a second cylinder 76, a second coil 77, and a second spring 78.
The second pilot valve body 75 is disposed in the second cylinder 76 and is movable in the left-right direction in FIG. 2. A second pilot valve 75a is formed at a left end of the second pilot valve body 75. A restoring force of the second spring 78 acts to move the second pilot valve body 75 to the left side. When the current flows through the second coil 77, the second pilot valve body 75 is attracted to the second coil 77 against the restoring force of the second spring 78, and thus moves to the right side.

(2-2-3) Connecting portion 63

The connecting portion 63 is a member that connects the first pilot electromagnetic valve 61 and the second pilot electromagnetic valve 62. The connecting portion 63 includes a first pilot valve seat 65, a second pilot valve seat 66, a communication path 64, a first connecting port 67, a second connecting port 68, and a third connecting port 69.
The first pilot valve seat 65 receives the first pilot valve 71a. The first pilot valve seat 65 communicates with the first connecting port 67. The first pilot electromagnetic valve 61 being closed means that the first pilot valve 71a comes into contact with the first pilot valve seat 65. At this time, the first connecting port 67 is closed by the first pilot valve 71a. The first pilot electromagnetic valve 61 being opened means that the first pilot valve 71a is separated from the first pilot valve seat 65. At this time, the first connecting port 67 is opened.

The second pilot valve seat 66 receives the second pilot valve 75a. The second pilot valve seat 66 communicates with the second connecting port 68. The second pilot electromagnetic valve 62 being closed means that the second pilot valve 75a comes into contact with the second pilot valve seat 66. At this time, the second connecting port 68 is closed by the second pilot valve 75a. The second pilot electromagnetic valve 62 being opened means that the second pilot valve 75a is separated from the second pilot valve seat 66. At this time, the second connecting port 68 is opened.

The communication path 64 communicates the first pilot valve seat 65 and the second pilot valve seat 66. A third connecting port 69 is formed in the communication path 64. When the first pilot electromagnetic valve 61 is opened, the first connecting port 67 and the third connecting port 69 communicate with each other via the communication path 64. When the second pilot electromagnetic valve 62 is opened, the second connecting port 68 and the third connecting port 69 communicate with each other via the communication path 64.

(2-3) Small-diameter pipe group 80

The small-diameter pipe group 80 is an assembly of capillary tubes, and includes a first flow path 81, a second flow path 82, and a third flow path 83. The first flow path 81 connects the first pilot chamber 55 and the first connecting port 67. The second flow path 82 connects the second pilot chamber 56 and the second connecting port 68. The third flow path 83 connects the second port P2 and the third connecting port 69.

(3) Operation of four-way switching valve 12

(3-1) State of cold heat utilization operation

FIG. 2 shows an arrangement of each part of the four-way switching valve 12 for performing the cold heat utilization operation. The valve body 52 is located on the left side. As a result, the valve body 52 allows the second port to communicate with the fourth port and allows the first port to communicate with the third port.

In order to position the valve body 52 on the left side, the first pilot electromagnetic valve 61 is opened and the second pilot electromagnetic valve 62 is closed. As a result, the second port P2 communicates with the first pilot chamber 55 via the third flow path 83, the third connecting port 69, the communication path 64, the first connecting port 67, and the first flow path 81. Since the pressure of the gas refrigerant existing in the second port P2 is low, the refrigerant R in the first pilot chamber 55 can be sucked into the second port P2. Since the diameter of the first piston hole 53a is small, the refrigerant R on both sides of the first piston is not immediately equalized.

Since the second pilot electromagnetic valve 62 is closed, the second pilot chamber 56 is isolated from the second port P2. At this time, the second pilot chamber 56 is filled with the high-pressure gas refrigerant flowing in from the second piston hole 54a.

A pressure difference between the low-pressure gas refrigerant in the first pilot chamber 55 and the high-pressure gas refrigerant in the second pilot chamber 56 causes a force to act so as to move the valve body 52 to the left. Accordingly, the valve body 52 can be stably located on the left side.

(3-2) Transient state

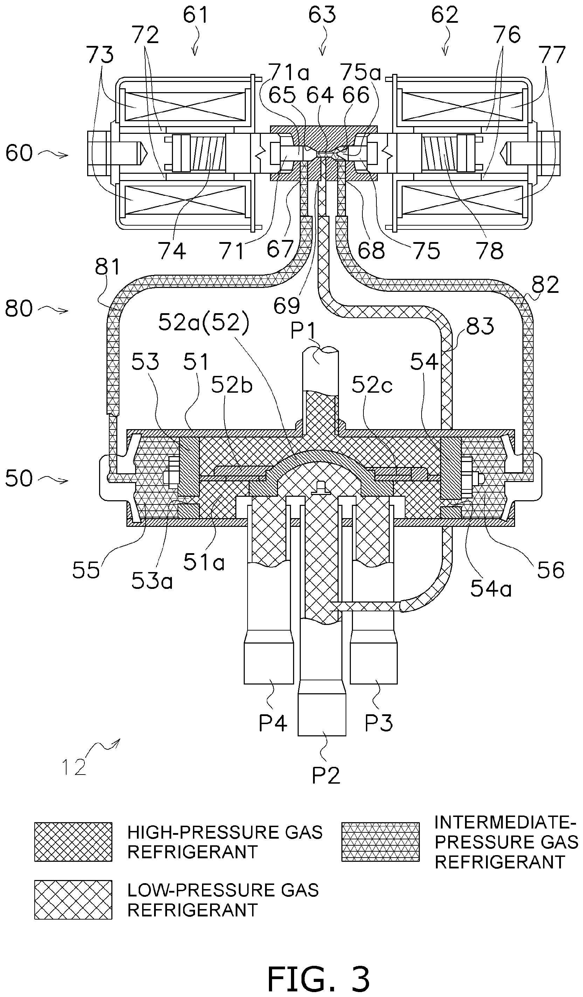

FIG. 3 shows a transient state of the four-way switching valve 12 at the time of switching from the cold heat utilization operation to the hot heat utilization operation. In order to switch the four-way switching valve 12, the first pilot electromagnetic valve 61 is closed and the second pilot electromagnetic valve 62 is opened. At this time, the second port P2 communicates with the second pilot chamber 56 via the third flow path 83, the third connecting port 69, the communication path 64, the second connecting port 68, and the second flow path 82. The high-pressure gas refrigerant in the second pilot chamber 56 can be sucked into the second port P2.

Since the first pilot electromagnetic valve 61 is closed, the first pilot chamber 55 is isolated from the second port P2. At this time, the first pilot chamber 55 becomes filled with the high-pressure gas refrigerant flowing in from the first piston hole 53a.

When the pressure of the gas refrigerant in the first pilot chamber 55 becomes larger than the pressure of the gas refrigerant in the second pilot chamber 56, a force acts so as to move the valve body 52 to the right.

(3-3) State of hot heat utilization operation

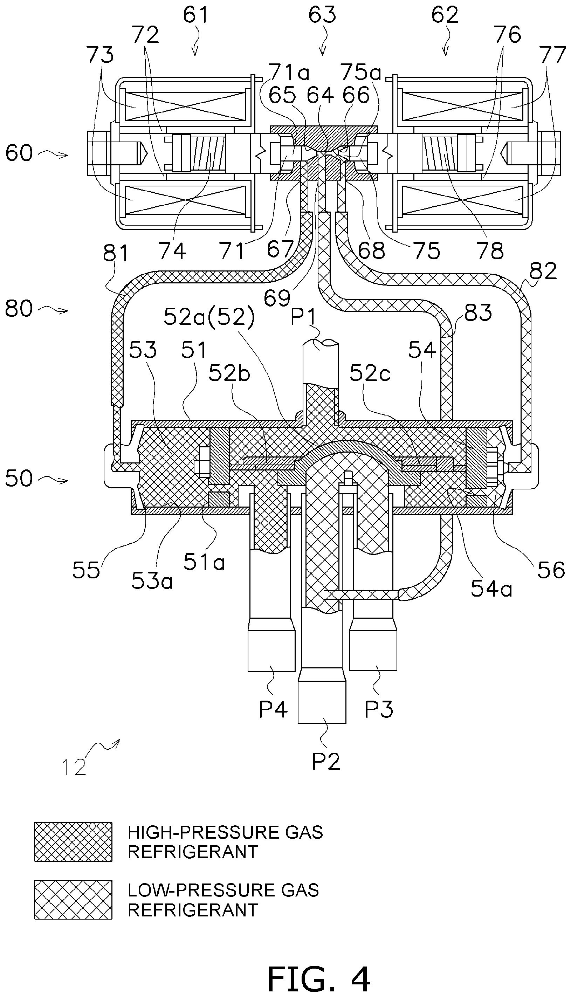

FIG. 4 is an arrangement of each part of the four-way switching valve when the hot heat utilization operation is performed. As in the transient state in FIG. 3, the first pilot electromagnetic valve 61 is closed and the second pilot electromagnetic valve 62 is opened. The valve body 52 located on the right side allows the second port to communicate with the third port and allows the first port to communicate with the fourth port.

A pressure difference between the high-pressure gas refrigerant in the first pilot chamber 55 and the low-pressure gas refrigerant in the second pilot chamber 56 causes a force to act so as to move the valve body 52 to the right. Accordingly, the valve body 52 can be stably located on the right side.

In order to perform the cold heat utilization operation again, control is performed so as to open the first pilot electromagnetic valve 61 and close the second pilot electromagnetic valve 62. Accordingly, by filling the first pilot chamber 55 with the low-pressure gas refrigerant and filling the second pilot chamber 56 with the high-pressure gas refrigerant, a force is generated so as to move the valve body 52 to the left.

(4) Control of four-way switching valve 12

(4-1) Electrical system of refrigeration apparatus 100

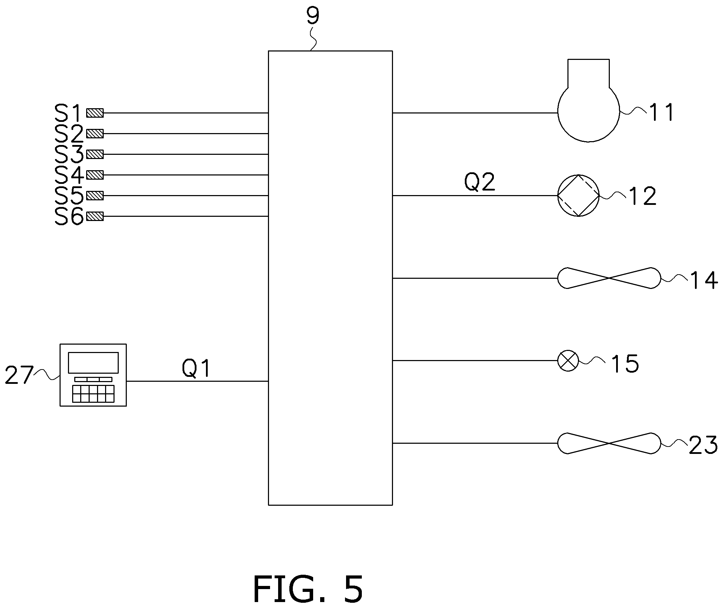

FIG. 5 shows an electric system of the refrigeration apparatus 100. Measurement value data of the low pressure sensor S1, the high pressure sensor S2, the heat source heat exchanger temperature sensor S3, the outside air temperature sensor S4, the utilization heat exchanger temperature sensor S5, and the room temperature sensor S6, and commands from the user transmitted from the remote controller 27 are input to the control unit 9. The control unit 9 outputs control signals to the compressor 11, the four-way switching valve 12, the heat source fan 14, the heat source expansion valve 15, and the utilization fan 24.

The commands transmitted from the remote controller 27 include a switch command Q1 for the four-way switching valve 12. For example, when the user inputs to the remote controller 27 to execute the hot heat utilization operation while the refrigeration apparatus 100 is executing the cold heat utilization operation, the remote controller 27 transmits the switch command Q1 to the control unit 9 in order to perform the switching of the four-way switching valve 12 and thereby to execute the hot heat utilization operation. Alternatively, when the user inputs to the remote controller 27 to execute the cold heat utilization operation while the refrigeration apparatus 100 is executing the hot heat utilization operation, the remote controller 27 transmits the switch command Q1 to the control unit 9 in order to perform the switching of the four-way switching valve 12 and thereby to execute the cold heat utilization operation.

Upon receiving the switch command Q1, the control unit 9 performs a predetermined calculation to output a switch control signal Q2 to the four-way switching valve 12. Specifically, the switch control signal Q2 is an open/close control signal to the first pilot electromagnetic valve 61 and the second pilot electromagnetic valve 62.

(4-2) Connecting flow path 91

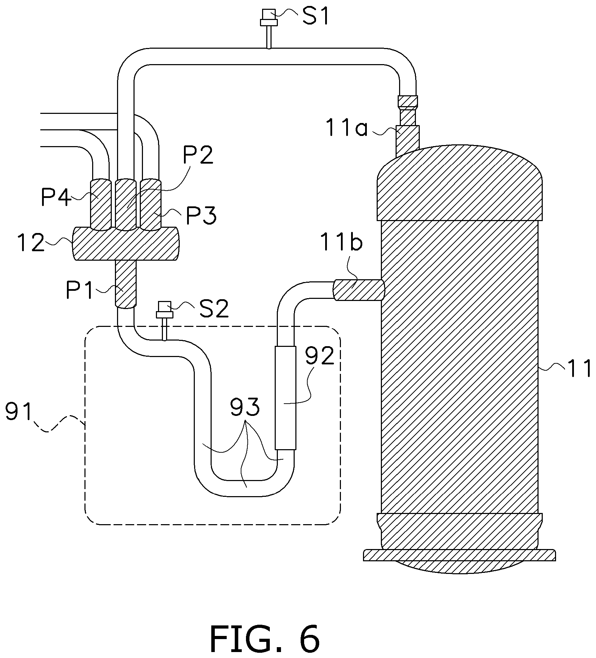

FIG. 6 shows a connecting pipe between the compressor 11 and the four-way switching valve 12. The discharge pipe 11b of the compressor 11 and the first port P1 of the four-way switching valve 12 are connected by a connecting flow path 91. The connecting flow path 91 includes a filter 92 and a U-shaped pipe 93 protruding downward. A refrigerating machine oil carried by the refrigerant R is likely to be stored in the U-shaped pipe 93 by an action of gravity.

A part of the refrigerating machine oil stored in the U-shaped pipe 93 can enter the four-way switching valve 12 from the first port P1 by the high-pressure refrigerant discharged from the discharge pipe 11b. The refrigerating machine oil in the four-way switching valve 12 can clog the first flow path 81, the second flow path 82, the third flow path 83, the first piston hole 53a, the second piston hole 54a, or the like, and may inhibit movement of the valve body 52, the first piston 53, and the second piston 54. As described above, the refrigerating machine oil may interfere with the operation of the four-way switching valve 12 to switch the circulation direction of the refrigerant R.

(4-3) Switching control

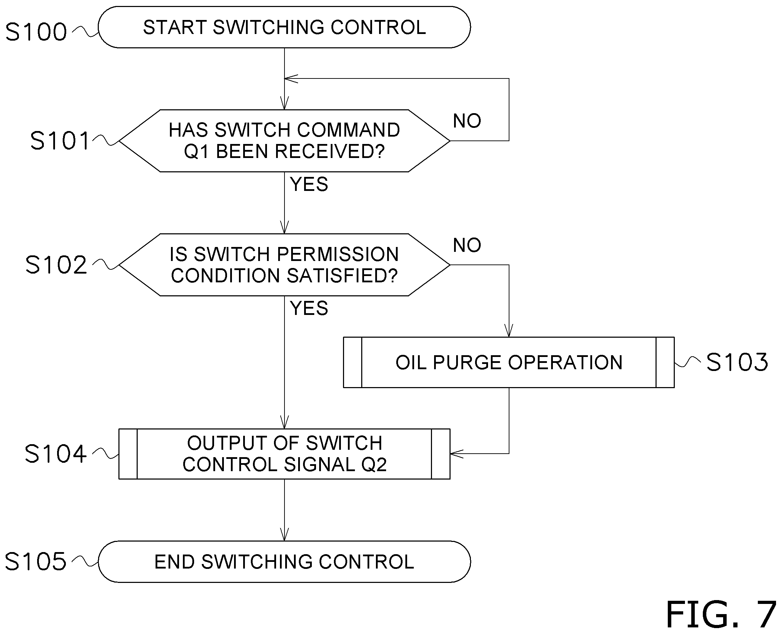

FIG. 7 is a flowchart of a main routine of switching control of the four-way switching valve 12. In step S100, the switching control is started. In step S101, the control unit 9 confirms whether the control unit 9 has already received the switch command Q1 issued from the remote controller 27 in response to the input from the user. When the control unit 9 has not received the switch command Q1 yet (S101: NO), the processing returns to step S101. When the control unit 9 has already received the switch command Q1 (S101: YES), the processing proceeds to step S102.

In step S102, the control unit 9 confirms whether a switch permission condition is satisfied. The switch permission condition relates to a Froude number indicating a refrigerant circulation amount. The Froude number is represented by Fr in the following formula.

[Formula 1]

$$\mathrm{Fr} = \frac{\rho_{\mathrm{G}} U_{\mathrm{G}}^2}{\rho_{\mathrm{L}} g D}$$

Here, $\rho_{\mathrm{G}}$ (kg/m$^3$) is a density of a gas refrigerant, $\rho_{\mathrm{L}}$ (kg/m$^3$) is a density of a liquid refrigerant, $U_{\mathrm{G}}$ (m/s) is a flow velocity of a gas refrigerant in the connecting flow path 91, g (m/s$^2$) is a gravitational acceleration, and D (m) is an inner diameter of a pipe constituting the connecting flow path 91.

Among the above, $\rho_{\mathrm{G}}$ (kg/m$^3$), $\rho_{\mathrm{L}}$ (kg/m$^3$), and g (m/s$^2$) are constants, and thus can be input to the control unit 9 in advance. D (m), which is a numerical value for designing, can be also input to the control unit 9 in advance. $U_{\mathrm{G}}$ (m/s) can be calculated on the basis of a parameter of a number of rotations of the compressor 11 output by the control unit 9.

For example, the switch permission condition can be set as in the following formula.

[Formula 2]

$$\mathrm{Fr} \geq 1$$

This formula means that the circulation amount of the refrigerant in the connecting flow path 91 is a predetermined value or more.

When the switch permission condition is satisfied (S102: YES), the processing proceeds to step S104. On the other hand, when the switch permission condition is not satisfied (S102: NO), the processing proceeds to step S103.

In step S103, a subroutine of an oil purge operation is executed. The oil purge operation is an operation of blowing off the refrigerating machine oil existing in the connecting flow path 91 by using the high-pressure gas refrigerant discharged from the compressor 11 and thereby moving the refrigerating machine oil downstream of the four-way switching valve 12. The subroutine of the oil purge operation will be described later. When the oil purge operation ends, the processing proceeds to step S104.

In step S104, the control unit 9 executes a subroutine of outputting the switch control signal Q2 to the four-way switching valve 12. The subroutine of outputting the switch control signal Q2 will be described later.

Thereafter, in step S105, the switching control of the four-way switching valve 12 ends.

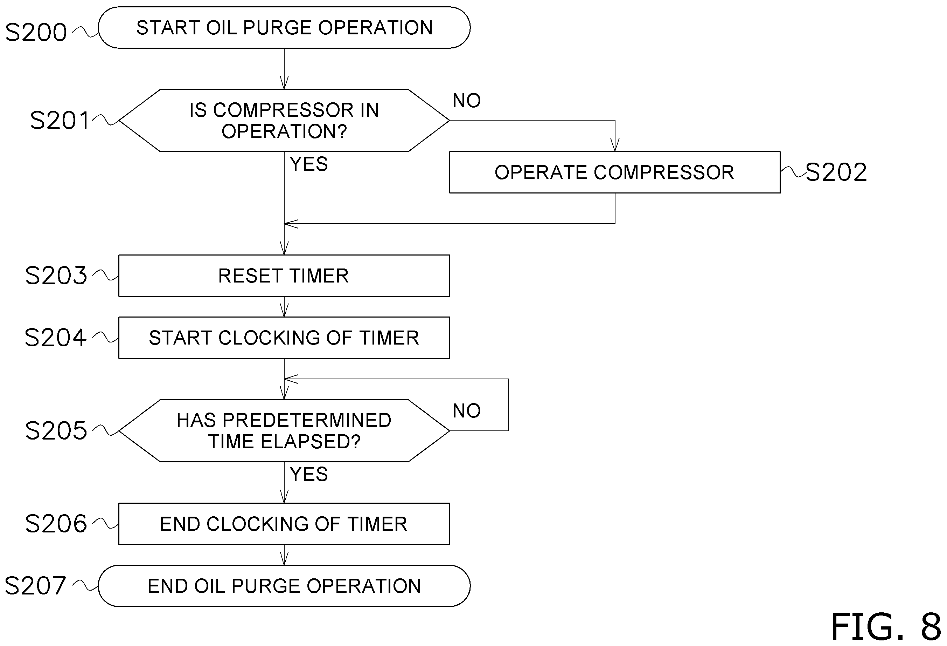

FIG. 8 is a flowchart of the subroutine of the oil purge operation. In step S200, the oil purge operation is started. In step S201, the control unit 9 confirms whether the compressor 11 is in operation. When the compressor 11 is in operation (S201: YES), the processing proceeds to step S203. On the other hand, when the compressor 11 is not in operation (S201: NO), the processing proceeds to step S202. In step S202, the operation of the compressor 11 is started. As a result, the high-pressure gas refrigerant is supplied from the discharge pipe 11b.

In step S203, a count value of a timer of the control unit 9 is reset to zero. In step S204, the control unit 9 starts clocking of the timer. In step S205, the control unit 9 refers to a value measured by the timer, and confirms whether a predetermined time has elapsed. The predetermined time is, for example, five seconds. When the predetermined time has not elapsed (S205: NO), the processing returns to step S205. On the other hand, when the predetermined time has elapsed (S205: YES), the processing proceeds to step S206. In step S206, the control unit 9 ends the clocking of the timer. In step S207, the subroutine of the oil purge operation ends.

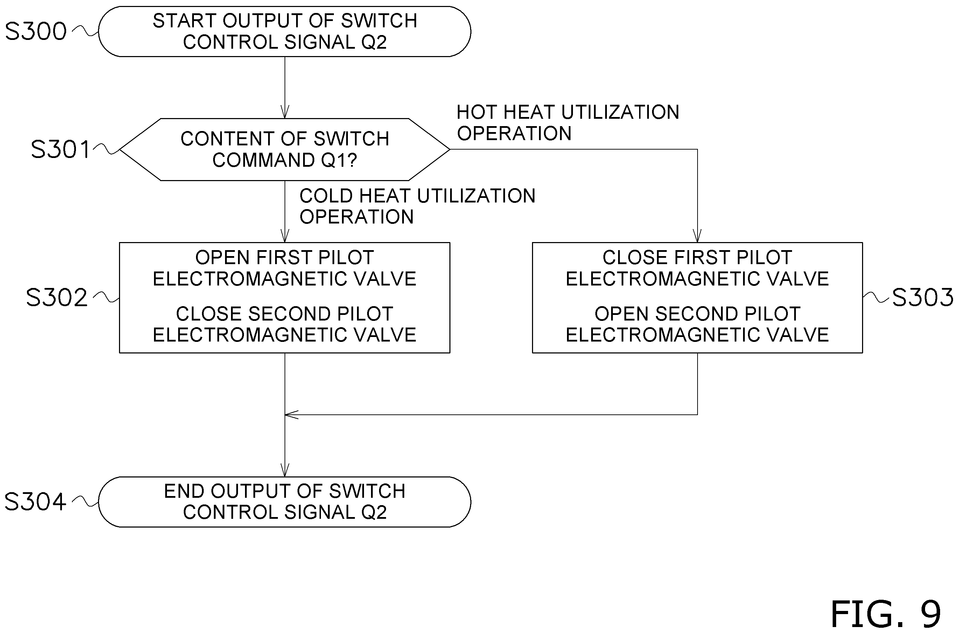

FIG. 9 is a flowchart of a subroutine of output processing of the switch control signal Q2. In step S300, the output of the switch control signal Q2 is started. In step S301, the control unit 9 confirms a content of the switch command Q1 already received. When the content of the switch command Q1 is to request execution of the cold heat utilization operation (step S301: cold heat utilization operation), the processing proceeds to step S302. In step S302, the control unit 9 outputs the switch control signal Q2 to open the first pilot electromagnetic valve 61 and close the second pilot electromagnetic valve 62. Thereafter, in step S304, the output processing of the switch control signal Q2 ends.

On the other hand, when the content of the switch command Q1 is to request execution of the hot heat utilization operation (step S301: hot heat utilization operation), the processing proceeds to step S303. In step S303, the control unit 9 outputs the switch control signal Q2 to close the first pilot electromagnetic valve 61 and open the second pilot electromagnetic valve 62. Thereafter, in step S304, the output processing of the switch control signal Q2 ends.

(5) Characteristics

(5-1)
When the state of the refrigerant R in the connecting flow path 91 does not satisfy the switch permission condition, the four-way switching valve 12 is not switched. Even when receiving the switch command Q1, the control unit 9 does not perform the switching of the four-way switching valve 12 as long as the switch permission condition is unsatisfied. It is therefore possible to suppress a failure of a switching operation or damage to the four-way switching valve 12.

(5-2)

The switch permission condition relates to the refrigerant circulation amount. Therefore, permission or prohibition of the switching of the four-way switching valve 12 can be determined in accordance with a speed of the refrigerant R that can blow off the refrigerating machine oil.

(5-3)

The switch permission condition is that a Froude value related to the circulation amount of the refrigerant R is equal to or more than a predetermined value, namely, one. Therefore, when the circulation amount of the refrigerant R is small, and therefore the refrigerating machine oil is expected to stagnate in the connecting flow path 91, it is possible to suppress a failure of the switching operation or damage to the four-way switching valve 12 due to the presence of the refrigerating machine oil that can be a resistance to the switching operation.

(5-4)

When the refrigerating machine oil is expected to stagnate in the connecting flow path 91, the oil purge operation is performed by driving the compressor 11 before the switching of the four-way switching valve 12. Therefore, the refrigerating machine oil to be a resistance to the switching operation is prevented from remaining in the four-way switching valve 12.

(5-5)

Due to the presence of the U-shaped pipe 93 protruding downward, the connecting flow path 91 has a structure in which the refrigerating machine oil easily stagnates. Therefore, the refrigerating machine oil can be effectively removed from the connecting flow path 91 and the four-way switching valve 12 by executing the oil purge operation.

(5-6)

The refrigerant R may include carbon dioxide. When carbon dioxide is used for the refrigerant R, a switching noise of the four-way switching valve 12 tends to be loud. In order to reduce the switching noise, processing of reducing the circulation amount of the carbon dioxide refrigerant may be performed, and as a result, the refrigerating machine oil easily stagnate in the connecting flow path 91. Therefore, the refrigerating machine oil can be effectively removed from the connecting flow path 91 and the four-way switching valve 12 by executing the oil purge operation.

(5-7)

The four-way switching valve 12 includes the first flow path 81, the second flow path 82, and the third flow path 83 that communicate the first pilot electromagnetic valve 61 or the second pilot electromagnetic valve 62 with the valve chamber 51a. Therefore, the oil purge operation can prevent the refrigerating machine oil from remaining in narrow flow paths such as the first flow path 81, the second flow path 82, and the third flow path 83.

(6) Modifications

(6-1) First modification

In the embodiment described earlier, the oil purge operation is executed when the switch command Q1 is issued. Alternatively or additionally, the oil purge operation may be executed immediately after activation or before shutdown of the refrigeration apparatus 100. In this case, the refrigerating machine oil is further prevented from remaining in the four-way switching valve 12.

(6-2) Second modification

In the embodiment described earlier, the first pilot electromagnetic valve 61 and the second pilot electromagnetic valve 62 are opened when the current flows through the first coil 73 or the second coil 77. Alternatively, the first pilot electromagnetic valve 61 and the second pilot electromagnetic valve 62 may be closed when the current flows through the first coil 73 or the second coil 77.

(6-3) Third modification

In the embodiment described earlier, the switch command Q1 is issued by the remote controller 27. Alternatively, the switch command Q1 may be issued by another part. For example, the switch command Q1 can be issued by being triggered by an output of the heat source heat exchanger temperature sensor S3. When the control unit 9 recognizes that the heat source heat exchanger 13 has dew condensation from a measurement value of the heat source heat exchanger temperature sensor S3 while the refrigeration apparatus 100 is performing the hot heat utilization operation, the control unit 9 can perform a defrost operation by issuing the switch control signal Q2 for causing the four-way switching valve 12 to execute the cold heat utilization operation.

(6-4) Fourth modification

In the embodiment described earlier, in the oil purge operation shown in FIG. 8, a content of the operation of the compressor 11 is not particularly changed from a normal operation. In other words, the content of the oil purge operation is not to control the first pilot electromagnetic valve 61 and the second pilot electromagnetic valve 62 for a predetermined time. Alternatively, in the oil purge operation, the content of the operation of the compressor 11 may be changed from the normal operation. For example, in the oil purge operation, the number of rotations of the compressor 11 may be decreased to a predetermined small value, or may be increased to a predetermined large value.

<Conclusion>

The embodiment of the present disclosure has been described above. It is understood that various changes to modes and details should be available without departing from the gist and scope of the present disclosure recited in the claims.

**REFERENCE SIGNS LIST**

9: control unit
10: heat source unit
11: compressor
11a: suction pipe
11b: discharge pipe
12: four-way switching valve
13: heat source heat exchanger
15: heat source expansion valve
19: heat source control unit
20: utilization unit
23: utilization heat exchanger
29: utilization control unit
30: connection piping
50: main valve portion
51: casing
51a: valve chamber
52: valve body
52a: valve main body
52b: first coupling portion
52c: second coupling portion
53: first piston
53a: first piston hole
54: second piston
54a: second piston hole
55: first pilot chamber
56: second pilot chamber
60: pilot valve portion
61: first pilot electromagnetic valve
62: second pilot electromagnetic valve
63: connecting portion
64: communication path
65: first pilot valve seat
66: second pilot valve seat
67: first connecting port
68: second connecting port
69: third connecting port
71: first pilot valve body

71a: first pilot valve
75: second pilot valve body
75a: second pilot valve
80: small-diameter pipe group
81: first flow path
82: second flow path
83: third flow path
90: refrigerant circuit
91: connecting flow path
93: U-shaped pipe
100: refrigeration apparatus
P1: first port
P2: second port
P3: third port
P4: fourth port
Q1: switch command
Q2: switch control signal
R: refrigerant

**CITATION LIST**

**PATENT LITERATURE**

Patent Literature 1: JP S63-015056 A

**Claims**

1.  A refrigeration apparatus (100) comprising:

    a refrigerant circuit (90) that includes a compressor (11), a four-way switching valve (12), and a connecting flow path (91) connecting the compressor and the four-way switching valve, and circulates a refrigerant (R); and
    a control unit (9) that performs switching of the four-way switching valve to change a circulation path of the refrigerant in the refrigerant circuit, wherein
    the control unit performs the switching of the four-way switching valve when a switch permission condition for the refrigerant in the connecting flow path is satisfied, and does not perform the switching of the four-way switching valve when the switch permission condition is not satisfied.

2.  The refrigeration apparatus according to claim 1, wherein upon receiving a switch command (Q1) to switch the four-way switching valve, the control unit does not perform the switching of the four-way switching valve when the switch permission condition is not satisfied.

3.  The refrigeration apparatus according to claim 1 or 2, wherein

    the switch permission condition relates to a Froude number that is an index indicating a refrigerant circulation amount,
    the Froude number is represented by Fr in a formula 1:

    [Formula 1]

    $$\mathrm{Fr} = \frac{\rho_G U_G^2}{\rho_L g D}$$

    $\rho_G$ (kg/m³) is a density of a gas refrigerant, $\rho_L$ (kg/m³) is a density of a liquid refrigerant, $U_G$ (m/s) is a flow velocity of the gas refrigerant, g (m/s²) is a gravitational acceleration, and D (m) is an inner diameter of a pipe constituting the connecting flow path.

4. The refrigeration apparatus according to claim 3, wherein the switch permission condition is that the Froude number is one or more.

5. The refrigeration apparatus according to any one of claims 1 to 4, wherein the control unit performs an oil purge operation of moving a refrigerating machine oil existing in the connecting flow path downstream of the four-way switching valve by driving the compressor when the switch permission condition is not satisfied.

6. The refrigeration apparatus according to claim 5, wherein when the switch permission condition is not satisfied and at least one of immediately after activation or before stop of the refrigeration apparatus, the control unit performs the oil purge operation.

7. The refrigeration apparatus according to any one of claims 1 to 6, wherein the connecting flow path includes a U-shaped pipe (93) protruding downward.

8. The refrigeration apparatus according to any one of claims 1 to 7, wherein the refrigerant includes carbon dioxide.

9. The refrigeration apparatus according to any one of claims 1 to 8, wherein

the four-way switching valve includes
a valve chamber (51a),
a valve body (52) that slides in the valve chamber,
a first pilot chamber (55) formed at an end of the valve chamber,
a second pilot chamber (56) formed at an end of the valve chamber opposite to the first pilot chamber,
a first port (P1) that receives the refrigerant discharged from the compressor, a second port (P2) that ejects the refrigerant sucked into the compressor, a third port (P3) that exchanges the refrigerant with a heat source heat exchanger, and a fourth port (P4) that exchanges the refrigerant with a utilization heat exchanger, the first port, the second port, the third port, and the fourth port being formed in the valve chamber,
a first pilot electromagnetic valve (61) and a second pilot electromagnetic valve (62) that are disposed apart from the valve chamber,
a first flow path (81) that allows the first pilot chamber and the first pilot electromagnetic valve to communicate with each other,
a second flow path (82) that allows the second pilot chamber and the second pilot electromagnetic valve to communicate with each other, and
a third flow path (83) that allows a communication path (64) of the first pilot electromagnetic valve and the second pilot electromagnetic valve to communicate with the second port.

FIG. 1

HIGH-PRESSURE GAS
REFRIGERANT

LOW-PRESSURE GAS
REFRIGERANT

FIG. 2

FIG. 3

HIGH-PRESSURE GAS
REFRIGERANT

LOW-PRESSURE GAS
REFRIGERANT

FIG. 4

FIG. 5

FIG. 6

EP 4 632 295 A1

```
S100 ──  START SWITCHING CONTROL

S101 ──  HAS SWITCH COMMAND        NO
         Q1 BEEN RECEIVED?

              YES

S102 ──  IS SWITCH PERMISSION      NO
         CONDITION SATISFIED?

              YES
                                   OIL PURGE OPERATION    ── S103

S104 ──  OUTPUT OF SWITCH
         CONTROL SIGNAL Q2

S105 ──  END SWITCHING CONTROL
```

FIG. 7

S200 — START OIL PURGE OPERATION

S201 — IS COMPRESSOR IN OPERATION?

NO → OPERATE COMPRESSOR ~S202

YES

S203 — RESET TIMER

S204 — START CLOCKING OF TIMER

S205 — HAS PREDETERMINED TIME ELAPSED?

NO

YES

S206 — END CLOCKING OF TIMER

S207 — END OIL PURGE OPERATION

FIG. 8

```
          ┌─────────────────────────┐
  S300 ───│  START OUTPUT OF SWITCH  │
          │    CONTROL SIGNAL Q2     │
          └─────────────────────────┘
                       │
                       ▼                    HOT HEAT UTILIZATION
          ┌─────────────────────────┐       OPERATION
  S301 ───<   CONTENT OF SWITCH      >─────────────────────┐
          <     COMMAND Q1?          >                     │
          └─────────────────────────┘                     │
                       │  COLD HEAT UTILIZATION            │
                       │  OPERATION                        │
                       ▼                                   ▼
          ┌─────────────────────────┐   ┌─────────────────────────┐
          │     OPEN FIRST PILOT     │   │    CLOSE FIRST PILOT     │
          │  ELECTROMAGNETIC VALVE   │   │  ELECTROMAGNETIC VALVE   │
  S302 ───│                          │   │                          │─── S303
          │    CLOSE SECOND PILOT    │   │    OPEN SECOND PILOT      │
          │  ELECTROMAGNETIC VALVE   │   │  ELECTROMAGNETIC VALVE    │
          └─────────────────────────┘   └─────────────────────────┘
                       │◄──────────────────────────────────┘
                       ▼
          ┌─────────────────────────┐
  S304 ───│   END OUTPUT OF SWITCH   │
          │    CONTROL SIGNAL Q2     │
          └─────────────────────────┘
```

FIG. 9

# EP 4 632 295 A1

## INTERNATIONAL SEARCH REPORT

International application No.

**PCT/JP2025/003362**

### A. CLASSIFICATION OF SUBJECT MATTER

*F25B 41/26*(2021.01)i; *F16K 11/065*(2006.01)i; *F25B 1/00*(2006.01)i
FI:   F25B41/26 A; F25B1/00 387Z; F16K11/065 Z

According to International Patent Classification (IPC) or to both national classification and IPC

### B. FIELDS SEARCHED

Minimum documentation searched (classification system followed by classification symbols)

F25B41/26; F16K11/065; F25B1/00

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-164238 A (MITSUBISHI HEAVY INDUSTRIES, LTD.) 22 August 2013 (2013-08-22) | 1-2, 5-8 |
| | paragraphs [0018]-[0048], fig. 1-6 | |
| Y | | 9 |
| A | | 3-4 |
| Y | Microfilm of the specification and drawings annexed to the request of Japanese Utility Model Application No. 92496/1982 (Laid-open No. 194470/1983) (TOKYO SHIBAURA ELECTRIC CO., LTD.) 24 December 1983 (1983-12-24), description, p. 1, line 16 to p. 3, line 9, fig. 1 | 9 |
| Y | JP 2008-75760 A (DAIKIN INDUSTRIES, LTD.) 03 April 2008 (2008-04-03) fig. 1, 3 | 9 |
| Y | CN 113028120 A (ZHEJIANG SANHUA INTELLIGENT CONTROLS CO., LTD.) 25 June 2021 (2021-06-25) fig. 6 | 9 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 February 2025** | **11 March 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2025/003362**

| Patent document cited in search report | | | Publication date (day/month/year) | Patent family member(s) | Publication date (day/month/year) |
|---|---|---|---|---|---|
| JP | 2013-164238 | A | 22 August 2013 | EP 2626652 A1 paragraphs [0019]-[0049], fig. 1-6 | |
| JP | 58-194470 | U1 | 24 December 1983 | (Family: none) | |
| JP | 2008-75760 | A | 03 April 2008 | (Family: none) | |
| CN | 113028120 | A | 25 June 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63015056 A